# FASCICULE DE BREVET EUROPEEN

(11) **EP 3 175 283 B1**
(45) Date de publication et mention de la délivrance du brevet: **06.06.2018**
(21) Numéro de dépôt: 15754271.3
(22) Date de dépôt: 23.07.2015
(51) Int. Cl.: G02C 1/08, G02C 5/14, G02C 5/22, G02C 7/02, G02C 7/10

(54) **PAIRE DE LUNETTES MODULABLE**
MODULARE BRILLE
MODULAR PAIR OF SPECTACLES

(30) Priorité: 01.08.2014 FR 1457529
(43) Date de publication de la demande: 07.06.2017
(73) Titulaire: Albouy, Laurent, 59000 Lille (FR)
(72) Inventeur: Albouy, Laurent, 59000 Lille (FR)
(74) Mandataire: Cabinet Rifflart Vandenbossche
(86) Numéro de dépôt international: PCT/FR2015/052048
(87) Numéro de publication internationale: WO 2016/016555

(56) Documents cités:
- GB-A- 734 208
- US-A1- 2011 032 471
- US-A1- 2013 169 922
- US-A1- 2013 242 251
- US-A1- 2014 063 442

## Description

La présente invention concerne une paire de lunettes modulable qui permet avantageusement le démontage de sa monture en sorte de pouvoir adapter ladite monture et les verres assemblés sur celle-ci. Ainsi, la paire de lunettes peut être customisée en fonction des envies ou de la tenue vestimentaire, et elle peut être adaptée en fonction des besoins de correction et/ou de protection solaire.

Des paires de lunettes modulables sont connues de l'homme du métier, notamment celles décrites dans les demandes de brevets ou brevet publiés sous les numéros WO 2012/074414 A1, US 2009/0279047 A1, WO 2011/149364 A1, GB 734208 et US 2014/0063442 A1.

Dans le document WO 2012/074414 A1, la paire de lunette comprend une monture démontable qui comporte un contour de verre constitué d'une partie supérieure et d'une partie inférieure. Des moyens d'assemblage sont mis en oeuvre entre lesdites parties supérieure et inférieure en sorte de les maintenir assemblées entre elles une fois les verres positionnés à l'intérieur du contour formé par lesdites parties. Les branches de la monture sont assemblées de manière démontable avec les côtés latéraux respectifs du contour. Pour cela, la partie supérieure du contour comprend sur ses deux côtés latéraux un premier méplat horizontal duquel s'étendent verticalement de chaque côté, un plot supérieur et un plot inférieur, les deux plots formant un même axe de pivotement. En outre, la partie inférieure du contour comprend sur ses deux côtés latéraux un second méplat horizontal muni d'un trou débouchant qui s'étend verticalement et qui est configuré pour recevoir le plot inférieur respectif. Lors de l'assemblage de la partie inférieure et de la partie supérieure du contour, sur chacun des côtés latéraux, le second méplat est disposé de manière attenante en dessous du premier méplat avec le plot inférieur qui passe au travers du trou débouchant et qui s'étend en dessous du second méplat. Ainsi, la portion d'extrémité du plot inférieur et le plot supérieur forment ensemble ledit axe de pivotement sur lequel vient s'assembler en liaison pivot la branche de lunette respective. Chaque branche comprend à son extrémité un méplat supérieur et un méplat inférieur, lesdits méplats supérieur et inférieur étant écartés l'un de l'autre d'une largeur correspondant à l'épaisseur totale des premier et second méplats attenants du contour formé une fois les parties inférieure et supérieure assemblées. Ces méplats supérieur et inférieur comprennent chacun une échancrure interne circulaire, les échancrures étant configurées pour recevoir respectivement le plot supérieur et la portion d'extrémité du plot inférieur. Lors du montage des branches sur le contour, les méplats supérieur et inférieur, montés en liaison pivot respectivement sur le plot supérieur et la portion d'extrémité du plot inférieur, empêchent le dégagement du second méplat vis-à-vis du premier méplat, attenants l'un à l'autre, ce qui maintient la partie supérieure et la partie inférieure du contour assemblées entre elles.

Selon un mode de réalisation décrit dans le document US 2009/0279047 A1, la paire de lunettes comprend une monture qui comporte un contour de verres monobloc. De chaque côté latéral du contour monobloc, une fente est agencée plus ou moins horizontalement et elle sépare ledit côté latéral en une partie latérale supérieure et une partie latérale inférieure. Les fentes sur les côtés latéraux permettent la déformation du contour monobloc en sorte de monter les verres sur ledit contour ou, inversement, de les retirer. Sur chacun des côtés latéraux, la partie latérale supérieure comprend un plot supérieur qui s'étend vers le haut, et la partie latérale inférieure comprend un plot inférieur qui s'étend vers le bas. Les plots supérieur et inférieur forment un même axe de pivotement d'une branche. Chaque branche comprend à son extrémité un méplat supérieur et un méplat inférieur qui comprennent chacun une échancrure interne circulaire, permettant audit méplat supérieur la réception du plot supérieur et audit méplat inférieur la réception du plot inférieur, en sorte de monter en liaison pivot la branche sur le côté latéral du contour. L'écartement entre les méplats supérieur et inférieur est tel que, lorsque les plots supérieur et inférieur sont engagés respectivement dans les échancrures, la fente est resserrée, ce qui assure le maintien des verres sur le contour de la monture.

Le document WO 2011/149364 A1 décrit un mode de réalisation identique à celui précité du document WO 2012/074414 A1. En outre, selon une autre variante décrite dans le document WO 2011/149364 A1, la monture comprend un contour de verre constitué d'une partie supérieure et d'une partie inférieure, des moyens d'assemblage entre lesdites parties supérieure et inférieure permettant de les maintenir assemblées entre elles une fois les verres positionnés à l'intérieur du contour formé par lesdites parties. Les branches de la monture sont assemblées de manière démontable avec les côtés latéraux respectifs du contour. Pour cela, la partie supérieure du contour comprend, sur ses deux côtés latéraux, un méplat supérieur horizontal dans lequel un trou débouchant est agencé verticalement. De même, la partie inférieure du contour comprend sur ses deux côtés latéraux un méplat inférieur horizontal muni d'un trou débouchant agencé verticalement. Lors de l'assemblage de la partie inférieure et de la partie supérieure du contour, sur chacun des côtés latéraux, le méplat inférieur est disposé de manière attenante en dessous du méplat supérieur, avec leurs trous débouchant qui coïncident pour former un unique trou de liaison. Chaque branche comprend à son extrémité un méplat duquel s'étend vers le bas un plot agencé pour s'engager dans le trou de liaison, en pénétrant par le dessus du méplat supérieur et en débouchant en dessous du méplat inférieur. Le plot comprend à son extrémité un rebord formant une butée qui nécessite d'encliqueter ledit plot dans le trou de liaison. Une fois le plot encliqueté, les méplats supérieur et inférieur sont maintenus en position attenante l'un vis-à-vis de l'autre grâce au méplat de la branche qui forme une butée sur le méplat supérieur, d'une part, et au rebord qui forme une butée sur le méplat inférieur, d'autre part.

Dans le brevet GB 734208, la paire de lunette comprend une monture constituée de deux parties supérieure et inférieure qui comprennent chacune à leurs extrémités latérales, des portions longitudinales de liaison. Lors de l'assemblage, à chaque extrémité latérale de la monture, les deux portions longitudinales de liaison des parties supérieure et inférieure sont mises bout à bout, de sorte à former un premier élément de liaison (mâle ou femelle) permettant la réception d'un second élément de liaison (femelle ou mâle) agencé à l'extrémité de la branche. L'engagement du second élément de liaison sur le premier élément de liaison permet de maintenir assemblées des parties supérieure et inférieure de la monture. Ces caractéristiques sont comparables à celles précitées et décrites dans le document WO 2011/149364 A1.

Dans la demande de brevet US 2014/0063442 A1, la monture est fendue à ses extrémités latérales, ce qui permet de constituer une partie supérieure et une partie inférieure en écartant la monture au niveau des fentes latérales. Deux portions longitudinales de liaison sont mises en oeuvre aux extrémités latérales respectives des parties supérieure et inférieure. De chaque côté latéral de la monture, la portion longitudinal de liaison de la partie inférieure est mises bout à bout avec la portion longitudinal de liaison de la partie supérieur, en resserrant la fente, ce qui permet de former le premier élément de liaison femelle qui reçoit un second élément de liaison mâle à l'extrémité de la branche. Le second élément de liaison permet de maintenir la fente resserrée, une fois mis en place dans le premier élément de liaison. Ces caractéristiques sont comparables à celles précitées et décrites dans le document US 2009/0279047 A1.

La présente invention vise à mettre en oeuvre une variante de conception d'une paire de lunettes en comparaison de celles déjà connues et décrites dans les documents WO 2012/074414 A1, US 2009/0279047 A1, WO 2011/149364 A1, GB 734208 et US 2014/0063442 A1.

A ce titre, l'invention concerne une paire de lunettes comprenant une monture qui comporte un contour de verres et deux branches montées en liaison pivot avec les extrémités latérales dudit contour. Le contour est muni d'une partie supérieure, d'une partie inférieure et de moyens d'assemblage amovibles entre lesdites parties. De manière remarquable, la partie supérieure comprend à chacune de ses extrémités latérales, une première portion longitudinale de semi-liaison et la partie inférieure comprend à chacune de ses extrémités latérales, une seconde portion longitudinale de semi-liaison. Le sens longitudinal est défini par la trajectoire de l'axe de la liaison pivot entre la branche et le contour. Les première et seconde portions longitudinales de semi-liaison sont complémentaires et configurées pour former un premier élément de liaison, femelle ou mâle, lors de l'assemblage de la partie supérieure et de la partie inférieure. Cela revient à effectuer une coupe du premier élément de liaison dans le sens longitudinal, c'est-à-dire dans le sens de l'axe de pivotement, de sorte à le séparer en deux morceaux correspondant aux première et seconde portions longitudinales de semi-liaison, ledit premier élément de liaison pouvant être reconstitué en imbriquant l'un dans l'autre lesdits deux morceaux. Ce premier élément de liaison est configuré pour recevoir un second élément de liaison, mâle ou femelle, agencé à l'extrémité de chaque branche respective.

On comprend que la paire de lunette selon l'invention se distingue des paires de lunettes de l'art antérieur, telles que celles décrites dans les documents WO 2012/074414 A1, US 2009/0279047 A1, WO 2011/149364 A1, GB 734208 et US 2014/0063442 A1, en ce que ces paires de lunettes antérieurs prévoient un tronçon longitudinal supérieur de liaison mâle ou femelle (et non une première portion longitudinale de semi-liaison) à chaque extrémité latérale de la partie supérieure du contour, et un tronçon longitudinal inférieur de liaison mâle ou femelle (et non une seconde portion longitudinale de semi-liaison) à chaque extrémité latérale de la partie inférieure du contour, lesdits tronçons supérieur et inférieur mâles ou femelles étant mis bout à bout pour former un premier élément de liaison mâle ou femelle lors de l'assemblage desdites parties supérieure et inférieure du contour. Cela revient à effectuer une coupe en deux tronçons du premier élément de liaison pivot selon un plan perpendiculaire à l'axe longitudinal de pivotement. Ce premier élément de liaison reçoit alors un second élément de liaison complémentaire, femelle ou mâle, qui est agencé à l'extrémité de chaque branche. Selon l'art antérieur, la mise bout à bout des tronçons supérieur et inférieur génère des problèmes de rigidité ou de consolidation de l'élément de liaison mis en oeuvre. Tandis que selon l'invention, les portions de semi-liaison sont interdépendantes, les surfaces de contact entre les deux portions de semi-liaison étant imbriquées l'une dans l'autre, ce qui permet d'augmenter la rigidité du premier élément de liaison en réduisant la mobilité entre les première et seconde portions de semi-liaison tant dans le sens de l'axe de pivotement que perpendiculairement audit axe de pivotement.

Dans une conception préférentielle de la paire de lunette objet de l'invention, la partie supérieure du contour comprend à chacune de ses extrémités latérales, une première portion semi-cylindrique creuse. De même, la partie inférieure du contour comprend à chacune de ses extrémités latérales une seconde portion semi-cylindrique creuse. Les première et seconde portions semi-cylindriques creuses sont complémentaires et configurées en sorte que lors de l'assemblage de la partie supérieure et de la partie inférieure, pour la constitution du contour, lesdites première et seconde portions semi-cylindriques s'associent et forment un cylindre creux muni d'une fente longitudinale dimensionnée pour permettre l'encliquetage d'un axe agencé à l'extrémité de chaque branche respective, pour le montage des branches sur le contour et, inversement, le décliquetage dudit axe, pour le démontage des branches de la monture.

On comprend que selon cette conception préférentielle, le cylindre creux constitue un premier élément de liaison femelle et l'axe constitue un second élément de liaison mâle. Il serait possible de prévoir, dans une variante de conception, une première portion longitudinale de semi-liaison constituée d'une première portion longitudinale semi-cylindrique pleine, formant par exemple un quartier d'axe, et une seconde portion longitudinale de semi-liaison constituée d'une seconde portion longitudinale semi-cylindrique pleine, formant par exemple trois quartiers d'axe, lesdites portions formant un axe complet, c'est-à-dire un premier élément de liaison mâle, lors de l'assemblage des parties supérieure et inférieure du contour. Selon cette variante, les extrémités des branches comprendraient donc un second élément de liaison femelle configuré pour s'encliqueter sur les extrémités supérieure et inférieure dudit axe complet. Par exemple, l'extrémité de chaque branche comprendrait un méplat supérieur muni sur sa face interne d'une échancrure cylindrique supérieure et un méplat inférieur muni sur sa face interne d'une échancrure cylindrique inférieure, les échancrures cylindriques supérieure et inférieure étant disposée en regard et munies chacune d'une fente permettant l'encliquetage des extrémités supérieure et inférieure respectives de l'axe complet et leurs réceptions respectives dans lesdites échancrures cylindriques supérieure et inférieure.

Selon la paire de lunettes objet de l'invention, des moyens de butée sont agencés aux extrémités des branches. Ces moyens de butées sont configurés pour bloquer la translation longitudinale de la première portion longitudinale de semi-liaison vis-à-vis de la seconde portion longitudinale de semi-liaison, après assemblage des parties supérieure et inférieure du contour et après montage de chaque branche sur ledit contour. Ainsi, le montage des branches sur le contour évite tout risque de désassemblage entre les parties supérieure et inférieure, au niveau des extrémités latérales dudit contour.

Dans une réalisation des moyens de butée, selon la conception préférentielle précitée de la paire de lunettes objet de l'invention, chaque branche comprend à son extrémité un méplat supérieur et un méplat inférieur écartés l'un de l'autre d'une distance correspondant à la longueur des portions semi-cylindriques. L'axe de la branche s'étend entre les méplats supérieur et inférieur. Ces méplats supérieur et inférieur forment des butées configurées pour bloquer la translation selon ledit axe de la première portion semi-cylindrique vis-à-vis de la seconde portion semi-cylindrique, une fois les parties supérieure et inférieure du contour assemblées entre elles.

Selon une conception préférentielle de la paire de lunettes objet de l'invention, les moyens d'assemblage comprennent un système d'encliquetage agencé entre la partie supérieure et la partie inférieure du contour de verres, dans une portion centrale dudit contour. Cela présente pour avantage d'assembler en deux temps les parties supérieure et inférieure du contour en sorte de faciliter la mise en place des verres sur ledit contour. En effet, l'utilisateur peut dans un premier temps encliqueter entre elles les parties supérieure et inférieure, dans la portion centrale du contour, ce qui lui permet ensuite de manipuler facilement les verres avec une main tout en maintenant le contour avec l'autre main. En outre, les extrémités latérales respectives des parties supérieure et inférieure peuvent être écartées légèrement pour introduire les verres dans le contour, avant son assemblage au niveau de ses extrémités latérales.

Selon cette conception préférentielle de la paire de lunettes objet de l'invention, la partie inférieure du contour de verres comprend dans sa portion centrale un élément de support nasal. En outre, le système d'encliquetage est configuré pour favoriser le décliquetage de la partie inférieure vis-à-vis de la partie supérieure en pressant sur ledit élément de support nasal. Cela garantit le maintien assemblé de la partie supérieure avec la partie inférieure dans la partie centrale du contour lors de son démontage, ce qui évite les risques éventuels de chute des verres lors du démontage de la monture. Selon la conception du système d'encliquetage, la pression sur l'élément de support nasal peut être réalisée dans un sens ou dans l'autre, comme cela sera détaillé dans la suite de la description.

Selon une conception préférentielle de la paire de lunettes objet de l'invention, les moyens d'assemblage comprennent deux systèmes d'emboîtement agencés entre la partie supérieure et la partie inférieure du contour de verres, respectivement au niveau des deux extrémités latérales dudit contour. Cela permet de déboîter facilement les parties supérieure et inférieure au niveau des extrémités latérales, une fois que les branches sont démontées de la monture. On pourrait toutefois prévoir, dans une variante de conception, des systèmes d'encliquetage agencés au niveau des extrémités latérales entre les parties supérieure et inférieure.

Dans une réalisation de la paire de lunettes objet de l'invention, selon la conception préférentielle prévoyant des première et seconde portions semi-cylindriques creuses, la première portion semi-cylindrique et la seconde portion semi-cylindrique sont configurées pour augmenter la flexibilité d'au moins une desdites portions semi-cylindrique, en sorte faciliter l'écartement de la fente lors de l'encliquetage ou du décliquetage de l'axe de la branche.

La présente invention concerne également un kit pour la constitution d'une paire de lunettes présentant l'une ou l'autre des caractéristiques précitées, voire plusieurs de ces caractéristiques. Le kit comprend au moins une partie supérieure de contour de verres, au moins une partie inférieure de contour de verres, au moins une paire de verres et au moins une paire de branches. Ainsi, il est possible de customiser la paire de lunettes en fonction de ses envies et/ou de sa tenue vestimentaire. De préférence, le kit comprend au moins deux paires de branches de différents coloris ou motifs.

De préférence, le kit objet de l'invention comprend au moins une paire de verres correcteurs et une paire de verres solaires. Cela permet d'adapter la paire de lunettes en fonction des conditions d'ensoleillement.

L'invention concerne également un kit comprenant une paire de lunette présentant les caractéristiques précités et un outil configuré pour permettre le démontage des branches en insérant ledit outil dans chaque branche et en ouvrant ladite branche vers l'extérieur par rapport au contour de verre. L'outil est configuré pour permettre le dégagement du second élément de liaison vis-à-vis du premier élément de liaison, en faisant levier. Dans une réalisation préférentielle, l'une des branches comprend une zone de logement configurée pour réceptionner et maintenir l'outil en position de rangement, ce qui permet de maintenir en permanence l'outil sur la paire de lunette. On pourrait toutefois envisager de conserver l'outil indépendamment de la paire de lunette, par exemple dans une boîte de rangement, puis de le sortir de la boîte au moment de son utilisation.

La description suivante met en évidence les caractéristiques et avantages de la paire de lunettes selon la présente invention. Cette description s'appuie sur des figures, parmi lesquelles :
- La figure 1 illustre une paire de lunettes selon l'invention ;
- La figure 2 illustre la paire de lunettes de la figure 1, en vue éclatée ;
- Les figures 3 à 5 illustrent respectivement la partie inférieure du contour, la partie supérieure du contour, et le contour une fois lesdites parties assemblées, selon un premier mode de réalisation ;
- Les figures 6 à 8 illustrent respectivement la partie inférieure du contour, la partie supérieure du contour, et le contour une fois lesdites parties assemblées, selon un second mode de réalisation ;
- Les figures 9 à 13 illustrent les différentes étapes de montage du contour de verres ;
- Les figures 14 à 17 illustrent les différentes étapes de démontage du contour de verres ;
- Les figures 18 et 19 illustrent une branche de la monture, selon deux vues différentes ;
- Les figures 20 et 21 illustrent le démontage d'une branche de la monture ;
- Les figures 22 et 23 illustrent une variante de mise en oeuvre du système d'encliquetage dans la portion centrale du contour de verres ;
- La figure 24 illustre une autre variante de mise en oeuvre du système d'encliquetage dans la portion centrale du contour de verres ;
- Les figures 25 et 26 illustrent un outil pour le dégagement des branches hors du contour;
- Les figures 27 à 29 illustrent les différentes étapes de dégagement d'une branche vis-à-vis du contour de verre, au moyen de l'outil illustré en figures 25 et 26.

Dans la suite de la description, les mêmes références sont utilisées pour définir les mêmes caractéristiques de la paire de lunettes, selon leurs différentes variantes de réalisation.

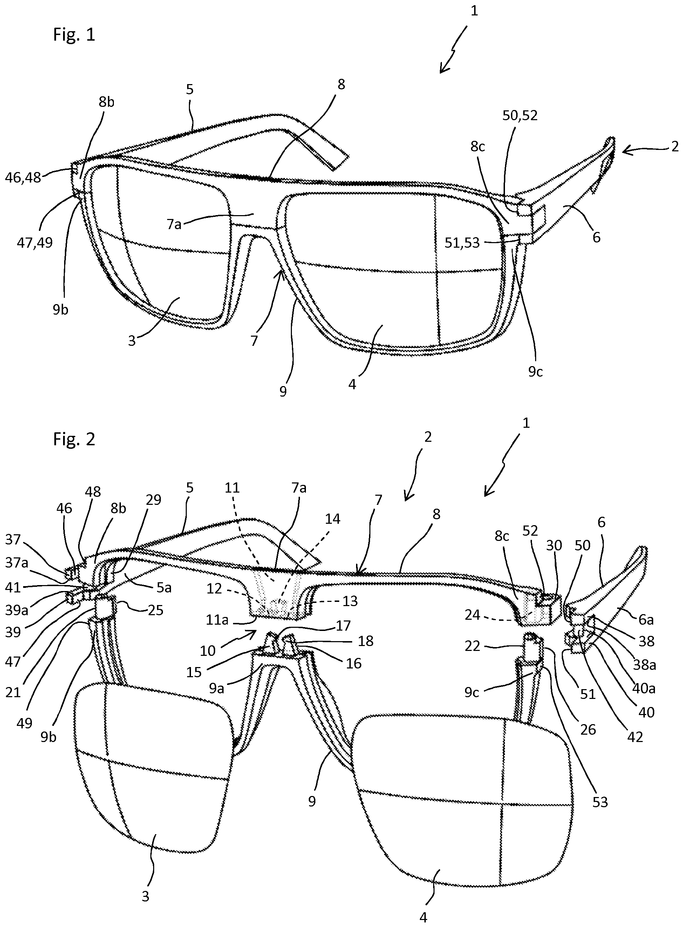

Sur les figures 1 et 2, la paire de lunettes 1 comprend une monture 2 sur laquelle sont montés deux verres 3, 4. Il peut s'agir de verres 3, 4 correcteurs ou solaires, voire une combinaison des deux. La monture 2 comprend deux branches 5, 6 qui sont assemblées en liaison pivot sur un contour 7 recevant les verres 3, 4. Le contour 7 comprend une partie supérieure 8 et une partie inférieure 9. Les axes de pivotement des branches 5, 6 par rapport au contour 7 définissent le sens longitudinal de ces liaisons pivots.

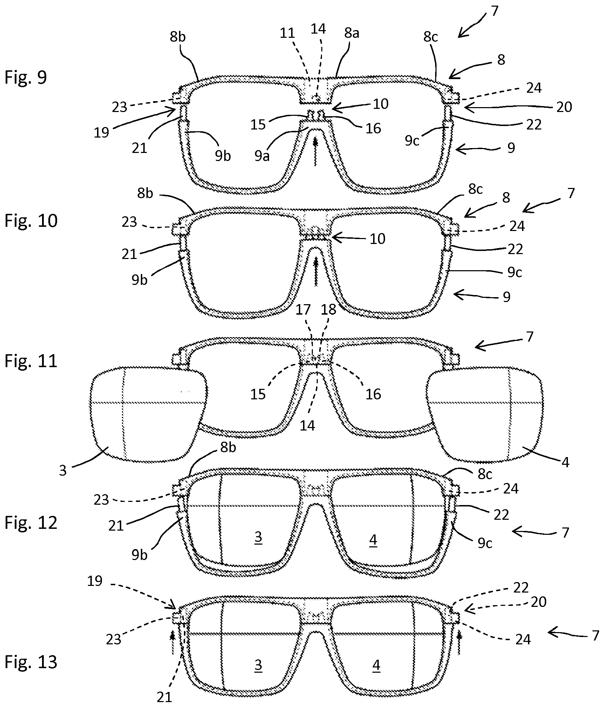

Un système d'encliquetage 10 est mis en oeuvre dans la portion centrale 7a du contour 7, entre la partie supérieure 8 et la partie inférieure 9. La portion centrale 8a de la partie supérieure 8 du contour 7 comprend une zone de logement 11 qui présente à son bord inférieur 11a deux trous 12, 13 séparés par une dent 14 qui s'étend vers le haut à l'intérieur du logement 11, tel que cela apparaît sur les figures 2, 4 et 7. La portion centrale 9a de la partie inférieure 9 du contour 7 comprend deux pattes 15, 16 qui s'étendent vers le haut et présentent chacune une griffe 17, 18. Ces griffes 17, 18 sont disposées en regard l'une de l'autre, aux extrémités supérieures respectives desdites pattes 15, 16. Ces pattes 15, 16 présentent en combinaison, une forme complémentaire à celle de la dent 14. L'insertion des pattes 15, 16 à l'intérieur des trous 12, 13 permet d'encliqueter les griffes 17, 18 sur la dent 14, comme l'illustrent les figures 9 à 11.

Des systèmes d'emboitement 19, 20 sont mis en oeuvre sur les extrémités latérales du contour 7, entre la partie supérieure 8 et la partie inférieure 9. Les extrémités latérales 9b, 9c de la partie inférieure 9 comprennent chacune un plot 21, 22 qui s'étend vers le haut, comme l'illustrent notamment les figures 2 et 9 à 12. Les extrémités latérales 8b, 8c de la partie supérieure 8 comprennent chacune un orifice 23, 24 configuré pour recevoir le plot 21, 22 respectif, comme l'illustrent notamment les figures 2 et 9 à 13.

Lors de l'assemblage du contour 7, une fois le système d'encliquetage 10 mis en place entre la partie supérieure 8 et la partie inférieure 9, tel qu'illustré en figures 9 à 11, les extrémités latérales 8b, 8c de la partie supérieure 8 restent dégagées vis-à-vis des extrémités latérales 9b, 9c de la partie inférieure 9, ce qui facilite la mise en place des verres 3, 4 à l'intérieur du contour 7, comme l'illustrent les figures 11 et 12. Une fois les verres 3, 4 positionnés sur le contour 7, les systèmes d'emboîtement 19, 20 sont mis en place entre les extrémités latérales 8b, 8c de la partie supérieure 8 et les extrémités latérales 9b, 9c de la partie inférieure 9.

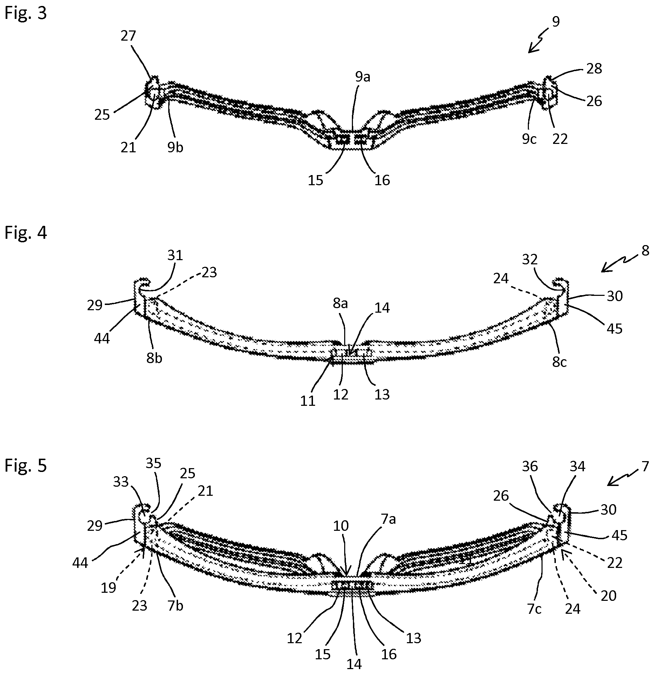

Les figures 3 à 5 illustrent un premier mode de réalisation du contour 7 de la monture 2. Sur les figures 2 et 3, la partie inférieure 9 du contour 7 comprend à chacune de ses extrémités latérales 9b, 9c, une première portion longitudinale semi-cylindrique 25, 26 qui présente un premier creux 27, 28. De même, sur les figures 2 et 4, la partie supérieure 8 du contour 7 comprend à chacune de ses extrémités latérales 8b, 8c, une seconde portion longitudinale semi-cylindrique 29, 30 qui présente un second creux 31, 32 de forme complémentaire au premier creux 27, 28. Le sens longitudinal est défini par les axes de pivotement des branches 5, 6 vis-à-vis du contour 7.Lors de l'assemblage de la partie supérieure 8 et de la partie inférieure 9, après mise en place des systèmes d'emboîtement 19, 20 entre les extrémités latérales 8b, 8c, 9b, 9c respectives desdites parties supérieure 8 et inférieure 9, la combinaison de la première portion longitudinale semi-cylindrique 25, 26 de la partie inférieure 9 avec la seconde portion longitudinale semi-cylindrique 29, 30 de la partie supérieure 8, à chacune des extrémités latérales 7b, 7c du contour 7, permet de constituer deux cylindres creux 33, 34 qui présentent chacun une fente 35, 36, comme l'illustre la figure 5. Cela revient à effectuer une coupe des cylindres creux 33, 34 dans le sens longitudinal de sorte à obtenir les premières portions longitudinales semi-cylindriques 25, 26 et les secondes portions longitudinales semi-cylindriques 29, 30 de formes complémentaires. La forme de la coupe dans le sens longitudinal peut être variable, par exemple une coupe droite dans un plan parallèle à l'axe de pivotement, ou une coupe en serpentin ou en zigzag qui favorise la réduction de mobilité entre lesdites première et seconde portions une fois jointes, tant dans le sens l'axe de pivotement que perpendiculairement audit axe.

Tel qu'illustré sur les figures 2, 18 et 19, les branches 5, 6 comprennent chacune à leur extrémité proximale 5a, 6a, un méplat supérieur 37, 38 et un méplat inférieur 39, 40 qui sont écartés l'un de l'autre d'une distance correspondant à la longueur des cylindres creux 33, 34. Un axe 41, 42 s'étend verticalement entre le méplat supérieur 37, 38 et le méplat inférieur 39, 40, pour chacune des branches 5, 6. Les fentes 35, 36 sur les cylindres creux 33, 34 aux extrémités latérales 7b, 7c du contour 7, sont proportionnées par rapport au diamètre des axes 41, 42 sur les branches 5, 6, en sorte de permettre l'encliquetage desdits axes 41, 42 à l'intérieur desdits cylindres creux 33, 34 respectifs, en les introduisant au travers desdites fentes 35, 36. Lors de l'encliquetage des branches 5, 6, sur les extrémités latérales 7b, 7c du contour 7, la première portion longitudinale semi-cylindrique 25, 26 et la seconde portion longitudinale semi-cylindrique 29, 30, associées entre elles en formant le cylindre creux 33, 34, sont maintenues bloquées en butée entre le méplat supérieur 37, 38 et le méplat inférieur 39, 40, ce qui évite tout mouvement de translation selon le sens de l'axe 41, 42 entre lesdites portions longitudinales semi-cylindriques 25, 26, 29, 30. Ce blocage entre la première portion longitudinale semi-cylindrique 25, 26 et la seconde portion longitudinale semi-cylindrique 29, 30 empêche le déboîtement du système d'emboîtement 19, 20 à chaque extrémité latérale 7b, 7c du contour 7.

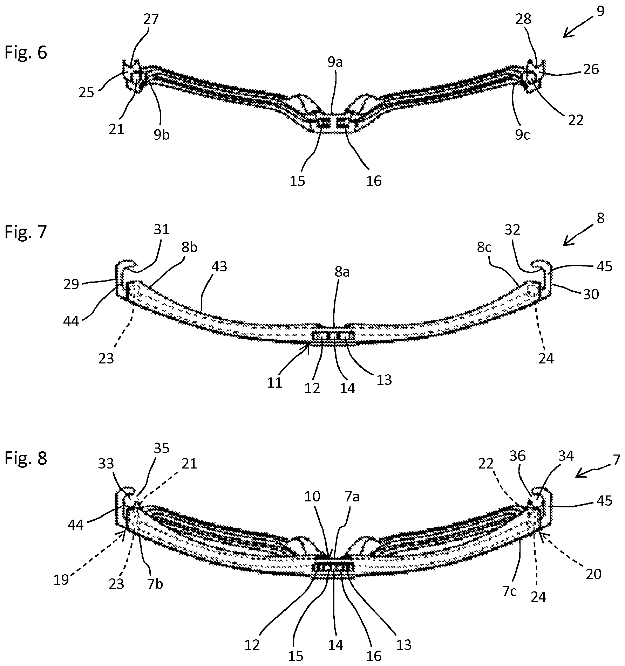

Les figures 6 à 8 illustrent une variante de réalisation des premières portions longitudinales semi-cylindriques 25, 26 sur la partie inférieure 9 et des secondes portions longitudinales semi-cylindriques 29, 30 sur la partie supérieure 8, pour la mise en oeuvre des cylindres creux 33, 34 munis d'une fente 35, 36. Leurs caractéristiques sont similaires à celles de la variante décrite précédemment et illustrée en figures 3 à 5, seules changent leurs formes semi-cylindriques. On constate sur la figure 3 que les creux 27, 28 sur les premières portions longitudinales semi-cylindriques 25, 26 s'étendent plus ou moins sur un quart de cercle et sont orientés vers les côtés externes, aux extrémités latérales 9b, 9c de la partie inférieure 9. Tandis que sur la figure 6, les creux 27, 28 sur les premières portions longitudinales semi-cylindriques 25, 26 présentent plus ou moins la forme d'un demi-cercle et sont orientés vers le côté arrière du contour 7, aux extrémités latérales 9b, 9c de la partie inférieure 9. De même, on constate sur la figure 4 que les creux 31, 32 sur les secondes portions longitudinales semi-cylindriques 29, 30 s'étendent sur un peu plus d'un demi-cercle et sont orientés vers les côtés internes, aux extrémités latérales 8b, 8c de la partie supérieure 8. Tandis que sur la figure 7, les creux 31, 32 sur les secondes portions longitudinales semi-cylindriques 29, 30 s'étendent sur un peu plus d'un quart de cercle et sont recourbés vers la face interne 43 de la partie supérieure 8, ce qui permet de constituer des extensions 44, 45 sur ces secondes portions longitudinales semi-cylindriques 29, 30, aux extrémités latérales 7b, 7c du contour 7, telles qu'illustrées en figures 7 et 8, ces extensions 44, 45 étant de plus faible épaisseur que les extensions 44, 45 similaires mises en oeuvre pour la première variante, telles qu'illustrées en figures 4 et 5. Ces extensions 44, 45 selon la seconde variante illustrée en figures 6 à 8, offrent une plus grande flexibilité aux cylindres creux 33, 34, ce qui favorise l'écartement des fentes 35, 36 lors de l'introduction des axes 41, 42 au travers desdites fentes 35, 36, pour réaliser l'encliquetage des branches 5, 6 sur les extrémités latérales 7b, 7c du contour 7.

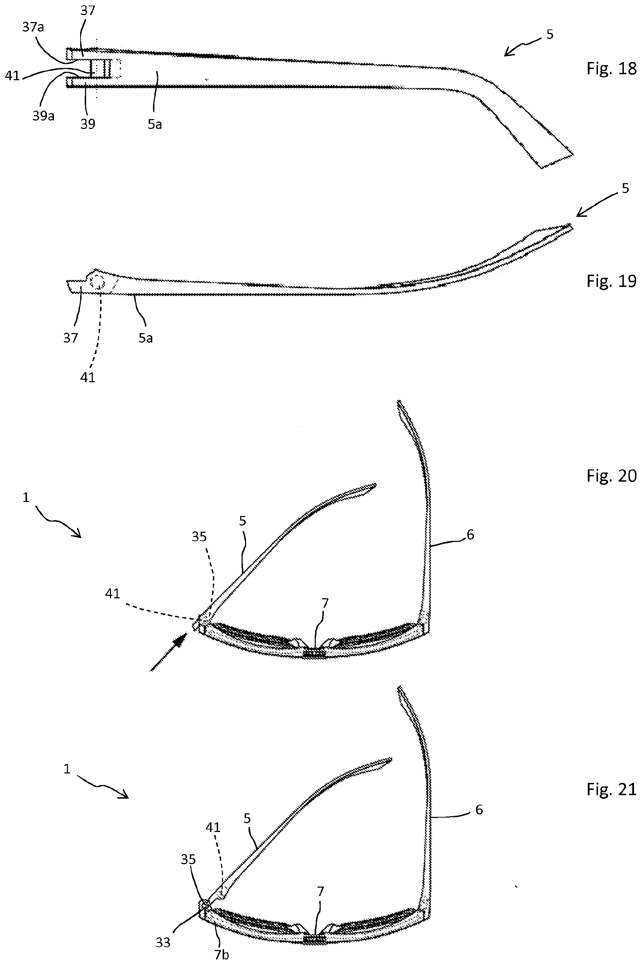

Tel qu'illustré sur les figures 1 et 2, des faces d'appui 46, 47 sur les méplats supérieur 37 et inférieur 39 de la première branche 5 viennent en butée contre des faces de contact 48, 49 agencées sur les extrémités latérales 8b, 9b des parties supérieure 8 et inférieure 9. De même, des faces d'appui 50, 51 sur les méplats supérieur 38 et inférieur 40 de la seconde branche 6 viennent en butée contre des faces de contact 52, 53 agencées sur les extrémités latérales 8c, 9c des parties supérieure 8 et inférieure 9. Ces éléments de butée limitent le pivotement vers l'extérieur des branches 5, 6, vis-à-vis du contour 7 et, en outre, empêchent le dégagement des axes 41, 42 des branches 5, 6, hors des cylindres creux 33, 34. En effet, comme le montrent les figures 20 et 21, il convient de positionner la branche 5 plus ou moins dans le sens de l'orientation de la fente 35 pour pouvoir dégager l'axe 41 hors du cylindre creux 33, à l'extrémité latérale 7b du contour. Il en est de même, selon une orientation inverse, pour la seconde branche 6. On comprend également que la mise en place des branches 5, 6 sur le contour 7 nécessite de respecter une orientation identique desdites branches 5, 6 vis-à-vis du contour 7, pour pouvoir introduire les axes 41, 42 dans les cylindres creux 33, 34, en passant par les fentes 35, 36.

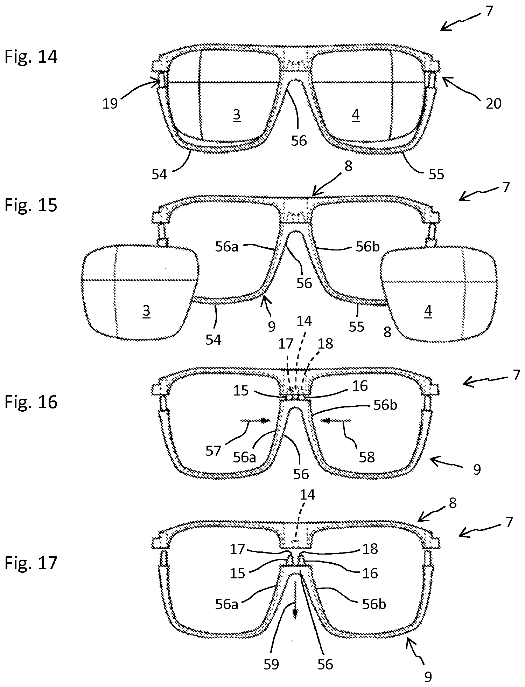

Les figures 14 à 17 illustrent le démontage du contour 7 pour permettre le retrait des verres 3, 4. Comme précisé précédemment, ce démontage n'est possible qu'une fois les branches 5, 6 dégagées des extrémités latérales 7b, 7c du contour 7, étant donné que les méplats supérieurs 37, 38 et inférieurs 39, 40 empêchent le déboîtement des systèmes de déboîtement 19, 20. Une fois les branches 5,6 retirées, les systèmes d'emboîtement 19, 20 entre les extrémités latérales 8b, 8c, 9b, 9c des parties supérieure 8 et inférieure 9 peuvent être dégagés, ce qui permet d'écarter légèrement les éléments circulaires 54, 55 de la partie inférieure 9 grâce à sa flexibilité, puis de dégager les verres 3, 4. On constate sur les figures 14 et 15 que le système d'encliquetage 10 sur la partie centrale 7a du contour reste en fonction alors que les systèmes d'emboîtement 19, 20 sont dégagés. Les éléments circulaires 54, 55 sont reliés entre eux par un élément de support nasal 56. La flexibilité de la partie inférieure 9 permet d'exercer une pression dans le sens des flèches 57, 58 illustrées en figure 16, sur les côtés latéraux 56a, 56b de cet élément de support nasal 56, ce qui permet d'écarter légèrement les griffes 17, 18 aux extrémités des pattes 15, 16, en sorte de dégager ces griffes 17, 18 de la dent 14, puis d'extraire les pattes 15, 16 hors de la zone de logement 11 dans le sens de la flèche 59 illustrée en figure 17, pour le décliquetage de la portion centrale 8a de la partie supérieure 8 vis-à-vis de la portion centrale 9a de la partie inférieure 9. Le dégagement dans le sens de la flèche 59 s'effectue en maintenant les côtés latéraux 56a, 56b de l'élément de support nasal 56.

D'autres variantes de mise en oeuvre sont envisageables sans sortir du cadre de l'invention. Selon les modes de mise en oeuvre préférentiels décrits précédemment, les premières portions longitudinales semi-cylindriques 25, 26 sur la partie inférieure 9 du contour 7 constituent chacune un premier élément longitudinal de semi-liaison. De même les secondes portions longitudinales semi-cylindriques 29, 30 sur la partie supérieure 8 du contour 7 constituent chacune un second élément longitudinal de semi-liaison. Ces premier et second éléments longitudinaux de semi-liaison sont complémentaires et forment ensemble un premier élément de liaison femelle lors de l'assemblage de la partie inférieure 9 et de la partie supérieure 8, formant ledit contour 7. Les axes 41, 42 sur les branches 5, 6 forment des seconds éléments de liaison mâles qui s'engagent chacun dans un premier élément de liaison. On comprend donc qu'il serait possible de prévoir une variante de conception inversée, selon laquelle les premiers éléments de liaison seraient de type mâle et les seconds éléments de liaison seraient de type femelle. Ainsi, les premières 25, 26 et secondes 29, 30 portions longitudinales semi-cylindriques formant chacune un creux 27, 28, 31, 32 pourraient être remplacées par des premières et secondes portions longitudinales semi-cylindriques pleines formant chacune un semi-axe, l'assemblage de la partie supérieure 8 avec la partie inférieure 9 permettant d'associer, à chacune des extrémités latérales 7b, 7c du contour 7, lesdites première et seconde portions longitudinales semi-cylindriques pleines en sorte de constituer un axe complet de liaison (non illustré). Dans cette variante de conception, les axes 41, 42 sur les branches 5, 6 seraient supprimés et remplacés par des échancrures cylindriques munies d'une fente (non illustrées), agencées de manière coaxiale sur les faces internes 37a, 38a, 39a, 40a des méplats supérieurs 37, 38 et inférieurs 39, 40 illustrées en figures 2 et 18, en sorte de constituer des éléments de liaison pivot femelles permettant la réception par encliquetage, desdits axes complets.

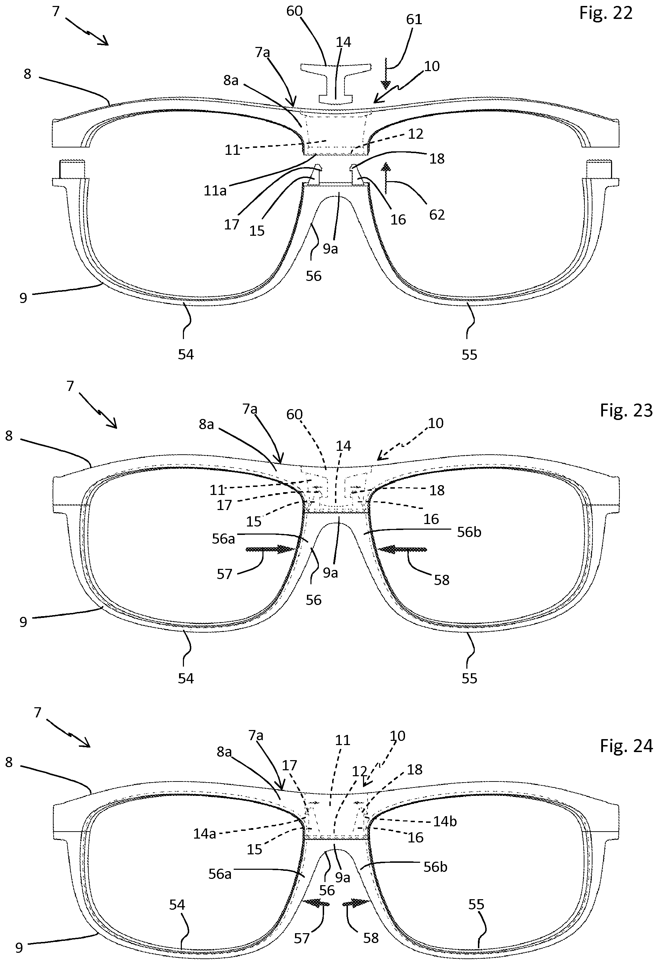

Les figures 22 et 23 montrent une variante du système d'encliquetage 10 décrit précédemment sur le mode de réalisation des figures 1 à 21, qui est mis en oeuvre dans la portion centrale 7a du contour 7, entre la partie supérieure 8 et la partie inférieure 9. La portion centrale 8a de la partie supérieure 8 du contour 7 comprend une zone de logement 11 qui présente à son bord inférieur 11a un seul trou 12. Un insert 60 est configuré pour être emboîté dans la zone de logement 11 par le côté supérieur de la portion centrale 8a, comme l'illustrent les figures 22 et 23. Cet insert comprend une dent 14 en forme de T inversé qui s'étend vers le bas à l'intérieur du logement 11, tel que cela apparaît sur les figures 22 et 23. La portion centrale 9a de la partie inférieure 9 du contour 7 comprend deux pattes 15, 16 qui s'étendent vers le haut et présentent chacune une griffe 17, 18. Ces griffes 17, 18 sont disposées en regard l'une de l'autre, aux extrémités supérieures respectives desdites pattes 15, 16. Ces pattes 15, 16 présentent en combinaison, une forme complémentaire à celle de la dent 14. L'insertion des pattes 15, 16 et de l'insert 60 dans la zone de logement 11, dans le sens des flèches 61, 62, permet d'encliqueter les griffes 17, 18 sur la dent 14, comme l'illustrent les figures 22 et 23. Les éléments circulaires 54, 55 sont reliés entre eux par un élément de support nasal 56. La flexibilité de la partie inférieure 9 permet d'exercer une pression dans le sens des flèches 57, 58 illustrées en figure 23, sur les côtés latéraux 56a, 56b de cet élément de support nasal 56, ce qui permet d'écarter légèrement les griffes 17, 18 aux extrémités des pattes 15, 16, en sorte de dégager ces griffes 17, 18 de la dent 14, puis d'extraire les pattes 15, 16 hors de la zone de logement 11, pour le décliquetage de la portion centrale 8a de la partie supérieure 8 vis-à-vis de la portion centrale 9a de la partie inférieure 9. Cet insert 60 évite avantageusement de laisser la zone de logement 11 ouverte sur son côté supérieur. Cette conception facilite en outre la mise en oeuvre du système de décliquetage 10, dont le moule de fabrication est plus facile à concevoir que le mode de réalisation précédent des figures 1 à 21.

La figure 24 montre une autre variante de ce système de décliquetage 10 mis en oeuvre dans la portion centrale 7a du contour 7, entre la partie supérieure 8 et la partie inférieure 9. La portion centrale 8a de la partie supérieure 8 du contour 7 comprend une zone de logement 11 qui présente à son bord inférieur un seul trou 12. La zone de logement 11 comprend sur ses côtés latéraux internes deux dents 14a, 14b disposées en vis-à-vis, tel que cela apparaît sur la figure 24. La portion centrale 9a de la partie inférieure 9 du contour 7 comprend deux pattes 15, 16 qui s'étendent vers le haut et présentent chacune une griffe 17, 18. Ces griffes 17, 18 sont disposées en opposition l'une par rapport à l'autre, aux extrémités supérieures respectives desdites pattes 15, 16. L'insertion des pattes 15, 16 dans la zone de logement 11, permet d'encliqueter les griffes 17, 18 sur les dents 14a, 14b respective, comme l'illustre la figure 24. La flexibilité de la partie inférieure 9 permet d'exercer une pression dans le sens des flèches 57, 58 illustrées en figure 24, sur les côtés latéraux 56a, 56b de cet élément de support nasal 56, ce qui permet de rapprocher légèrement les griffes 17, 18 aux extrémités des pattes 15, 16, en sorte de dégager ces griffes 17, 18 des dents 14a, 14b, puis d'extraire les pattes 15, 16 hors de la zone de logement 11, pour le décliquetage de la portion centrale 8a de la partie supérieure 8 vis-à-vis de la portion centrale 9a de la partie inférieure 9.

Le matériau utilisé pour la conception de la partie supérieure 8 et de la partie inférieure 9 sera choisi en sorte d'offrir suffisamment de flexibilité au niveau des fentes 35, 36, des éléments circulaires 54, 55, des côtés latéraux 56a, 56a de l'élément de support nasal 56 et des pattes 15, 16. La matière utilisée sera par exemple du nylon, du polycarbonate ou de l'acétate, voire toute autre matière appropriée.

L'invention prévoit également un kit pour la mise en oeuvre d'une paire de lunette 1 pouvant être customisée en fonction des envies de l'utilisateur voire de sa tenue vestimentaire. A ce titre, le kit comprend plusieurs paires de branches 5, 6 avec des coloris et/ou des motifs variés. De même, le kit comprend plusieurs parties supérieures 8 et plusieurs parties inférieures 9 avec des coloris et/ou des motifs variés. Le kit comprend en outre plusieurs paires de verres 3, 4, par exemple des paires de verres correcteurs avec différentes teintes de verre, et des paires de verres solaires.

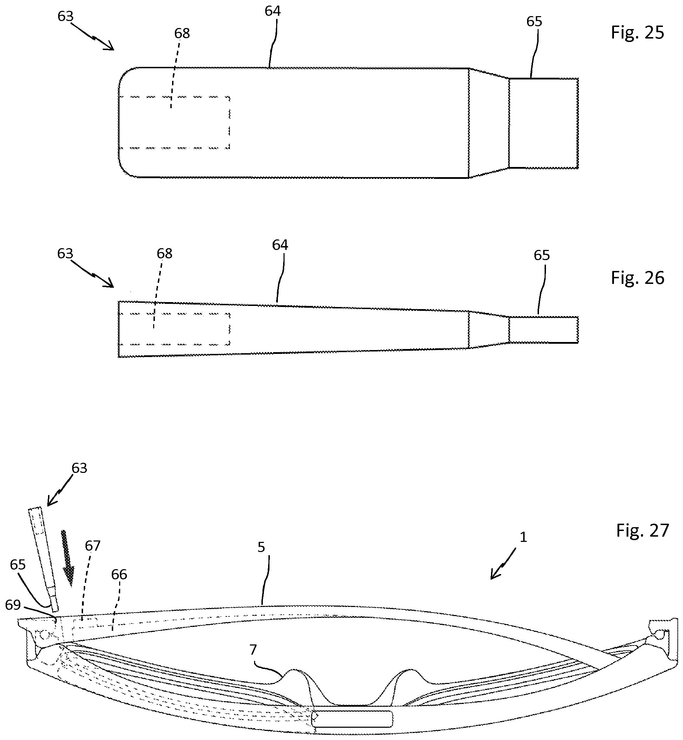

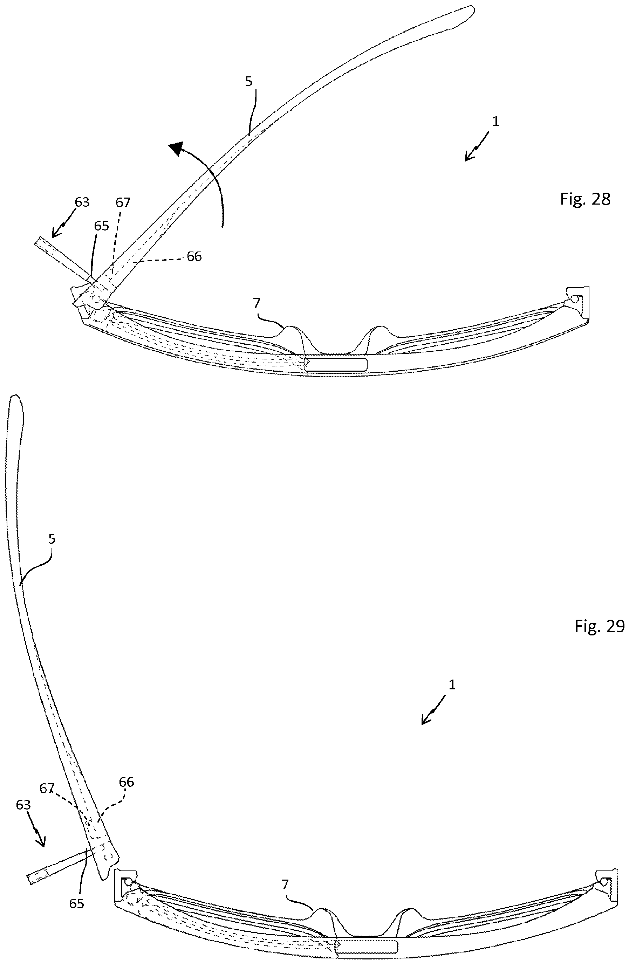

L'invention concerne aussi un kit comprenant une paire de lunette 1 présentant les caractéristiques précitées selon l'une ou l'autre des variantes décrites, voire toutes autres variantes, et un outil 63 qui permet de démonter facilement les branches 5, 6 vis-à-vis du contour 7, pour customiser ladite paire de lunette 1. Cet outil 63 présente la forme d'un bâtonnet tel qu'illustré en figures 25 et 26, avec un corps 64 configuré pour être manipulé et une tête 65 configurée pour s'engager dans une ouverture 69 sur la branche 5, au niveau de sa liaison avec le contour 7, comme l'illustre notamment la figure 27, la branche 5 étant en position rabattue contre le contour 7. L'ouverture de la branche 7, telle qu'illustrée en figure 28 permet à la tête 65 de l'outil 63 de jouer le rôle de levier ou de coin, qui contraint la branche 5 à se décliqueter du contour 7, tel que l'illustre la figure 29. Bien entendu, cet outil 63 permet le décliquetage de la seconde branche 6 qui n'est pas illustrée sur les figures 27 à 29. Tel qu'illustré sur les figures 27 à 29, la branche 5 comprend une zone de logement 66 dont la forme correspond à celle de l'outil 63 illustré en figure 25 et 26, avec des dimensions légèrement supérieures, de sorte à permettre l'encastrement de l'outil 63 dans cette zone de logement 66. La zone de logement 66 comprend un aimant 67, illustré en figures 27 à 29. De même, l'outil 63 comprend un aimant 68 illustré en figures 25 et 26. Ces aimants 67, 68 assurent un maintien convenable de l'outil 63 dans la zone de logement 66. Ainsi l'outil 63 peut rester en permanence présent sur la paire de lunette 1. Cette outil 63 peut être intégré au kit précité qui comprend plusieurs parties supérieures 8 et plusieurs parties inférieures 9, ainsi que plusieurs paires de verres 3, 4, pour permettre la customisation de la paire de lunette 1.

## Revendications

1. Paire de lunettes (1) comprenant une monture qui comporte un contour (7) et deux branches (5, 6) montées en liaison pivot avec les extrémités latérales (7b, 7c) dudit contour, lequel est muni d'une partie supérieure (8), d'une partie inférieure (9) et de moyens d'assemblage (10, 19, 20) entre lesdites parties, l'axe de pivotement définissant un sens longitudinal, ladite paire de lunettes étant **caractérisée en ce que** la partie supérieure comprend à chacune de ses extrémités latérales (8b, 8c) une première portion longitudinale de semi-liaison (29, 30) et la partie inférieure comprend à chacune de ses extrémités latérales (9b, 9c) une seconde portion longitudinale de semi-liaison (25, 26), les première et seconde portions longitudinales de semi-liaison étant obtenues en réalisant une coupe d'un premier élément de liaison (33, 34), femelle ou mâle, dans ledit sens longitudinal, lesdites première et seconde portions longitudinales de semi-liaison étant complémentaires et configurées pour former le premier élément de liaison lors de l'assemblage de la partie supérieure et de la partie inférieure, ledit premier élément de liaison étant configuré pour recevoir un second élément de liaison (41, 42), mâle ou femelle, agencé à l'extrémité (5a, 6a) de chaque branche respective.

2. Paire de lunettes (1) selon la revendication 1, dans laquelle la partie supérieure (8) comprend à chacune de ses extrémités latérales (8b, 8c) une première portion semi-cylindrique creuse (29, 30) et la partie inférieure (9) comprend à chacune de ses extrémités latérales (9b, 9c) une seconde portion semi-cylindrique creuse (25, 26), les première et seconde portions semi-cylindriques étant complémentaires et configurées en sorte que lors de l'assemblage de la partie supérieure et de la partie inférieure, lesdites première et seconde portions forment un cylindre creux (33, 34) muni d'une fente (35, 36) longitudinale dimensionnée pour permettre l'encliquetage d'un axe (41, 42) agencé à l'extrémité (5a, 6a) de chaque branche (5, 6) respective.

3. Paire de lunettes (1) selon l'une des revendications 1 ou 2, dans laquelle des moyens de butée (37, 38, 39, 40) sont agencés aux extrémités (5a, 6a) des branches (5, 6), les moyens de butées étant configurés pour bloquer la translation longitudinale de la première portion longitudinale de semi-liaison (25, 26) vis-à-vis de la seconde portion longitudinale de semi-liaison (29, 30) lors du montage de chaque branche sur le contour (7).

4. Paire de lunettes (1) selon la revendication 3 rattachée à la revendication 2, dans laquelle chaque branche (5, 6) comprend à son extrémité (5a, 6a) un méplat supérieur (37, 38) et un méplat inférieur (39, 40) entre lesquels s'étend l'axe (41, 42), lesdits méplats supérieur et inférieur formant des butées configurées pour bloquer la translation selon ledit axe de la première portion semi-cylindrique (25, 26) vis-à-vis de la seconde portion semi-cylindrique (29, 30).

5. Paire de lunettes (1) selon l'une des revendications 1 à 4, dans laquelle les moyens d'assemblage comprennent un système d'encliquetage (1) agencé entre la partie supérieure (8) et la partie inférieure (9) du contour (7), dans une portion centrale (7a) dudit contour.

6. Paire de lunettes (1) selon la revendication 5, dans laquelle la partie inférieure (9) du contour (7) comprend dans sa portion centrale (9a) un élément de support nasal (56), le système d'encliquetage (10) étant configuré pour favoriser le décliquetage de la partie inférieure vis-à-vis de la partie supérieure (8) en pressant sur ledit élément de support nasal.

7. Paire de lunettes (1) selon l'une des revendications 1 à 6, dans laquelle les moyens d'assemblage comprennent deux systèmes d'emboîtement (19, 20) agencés entre la partie supérieure (8) et la partie inférieure (9) du contour (7), respectivement au niveau des deux extrémités latérales (7b, 7c) dudit contour.

8. Paire de lunettes (1) selon la revendication 2, dans laquelle la première portion semi-cylindrique (25, 26) et la seconde portion semi-cylindrique (29, 30) sont configurés pour augmenter la flexibilité d'au moins une desdites portions cylindrique en sorte faciliter l'écartement de la fente (35, 36) lors de l'encliquetage ou du décliquetage de l'axe (41, 42) de la branche (5, 6).

9. Kit pour la constitution d'une paire de lunettes (1) selon l'une des revendications 1 à 8, lequel comprend au moins une partie supérieure (8), au moins une partie inférieure (9), au moins une paire de verres (3,4) et au moins une paire de branches (5, 6).

10. Kit selon la revendication 9, lequel comprend au moins une paire de verres (5, 6) correcteurs et une paire de verres solaires.

11. Kit selon l'une des revendications 9 ou 10, lequel comprend au moins deux paires de branches (5, 6) de différents coloris ou motifs.

12. Kit comprenant une paire de lunette (1) selon l'une des revendications 1 à 8 et un outil (63) configuré pour permettre le démontage des branches (5, 6) en insérant ledit outil dans chaque branche et en ouvrant la branche vers l'extérieur par rapport au contour (7).

13. Kit selon la revendication 12, dans lequel l'une des branches (5) comprend une zone de logement (66) configurée pour réceptionner et maintenir l'outil (63) en position de rangement.

## Patentansprüche

1. Brille (1), umfassend eine Fassung, die einen Rahmen (7) und zwei Bügel (5, 6) umfasst, welche in Gelenkverbindung mit den seitlichen Enden (7b, 7c) des Rahmens montiert sind, der mit einem oberen Teil (8), mit einem unteren Teil (9) und mit Fügemitteln (10, 19, 20) zwischen den Teilen ausgestattet ist, wobei die Schwenkachse eine Längsrichtung definiert, wobei die Brille **dadurch gekennzeichnet ist, dass** der obere Teil an jedem seiner seitlichen Enden (8b, 8c) einen ersten Halbverbindungs-Längsabschnitt (29, 30) umfasst, und der untere Teil an jedem seiner seitlichen Enden (9b, 9c) einen zweiten Halbverbindungs-Längsabschnitt (25, 26) umfasst, wobei der erste und zweite Halbverbindungs-Längsabschnitt durch Ausführen eines Schnitts in der Längsrichtung eines ersten, weiblichen oder männlichen, Verbindungselements (33, 34) erhalten werden, wobei der erste und zweite Halbverbindungs-Längsabschnitt komplementär und dafür ausgebildet sind, beim Zusammenfügen des oberen Teils und des unteren Teils das erste Verbindungselement zu bilden, wobei das erste Verbindungselement dafür ausgebildet ist, ein zweites, männliches oder weibliches, Verbindungselement (41, 42) aufzunehmen, welches am Ende (5a, 6a) jedes jeweiligen Bügels angeordnet ist.

2. Brille (1) nach Anspruch 1, wobei der obere Teil (8) an jedem seiner seitlichen Enden (8b, 8c) einen ersten halbzylindrischen Hohlabschnitt (29, 30) umfasst, und der untere Teil (9) an jedem seiner seitlichen Enden (9b, 9c) einen zweiten halbzylindrischen Hohlabschnitt (25, 26) umfasst, wobei der erste und zweite halbzylindrische Abschnitt komplementär und derart ausgebildet sind, dass beim Zusammenfügen des oberen Teils und des unteren Teils der erste und zweite Abschnitt einen Hohlzylinder (33, 34) bilden, welcher mit einem Längsschlitz (35, 36) ausgestattet ist, der dafür bemessen ist, das Einklicken einer Achse (41, 42), welche am Ende (5a, 6a) jedes jeweiligen Bügels (5, 6) angeordnet ist, zu ermöglichen.

3. Brille (1) nach einem der Ansprüche 1 oder 2, wobei an den Enden (5a, 6a) der Bügel (5, 6) Anschlagmittel (37, 38, 39, 40) angeordnet sind, wobei die Anschlagmittel dafür ausgebildet sind, beim Montieren jedes Bügels am Rahmen (7) die Längstranslation des ersten Halbverbindungs-Längsabschnitts (25, 26) gegenüber dem zweiten Halbverbindungs-Längsabschnitt (29, 30) zu blockieren.

4. Brille (1) nach Anspruch 3 in Verbindung mit Anspruch 2, wobei jeder Bügel (5, 6) an seinem Ende (5a, 6a) eine obere Abflachung (37, 38) und eine untere Abflachung (39, 40) umfasst, zwischen denen sich die Achse (41, 42) erstreckt, wobei die obere und untere Abflachung Anschläge bilden, die dafür ausgebildet sind, die Translation des ersten halbzylindrischen Abschnitts (25, 26) gegenüber dem zweiten halbzylindrischen Abschnitt (29, 30) entlang der Achse zu blockieren.

5. Brille (1) nach einem der Ansprüche 1 bis 4, wobei die Fügemittel ein Klicksystem (1) umfassen, welches in einem mittleren Abschnitt (7a) des Rahmens zwischen dem oberen Teil (8) und dem unteren Teil (9) des Rahmens (7) angeordnet ist.

6. Brille (1) nach Anspruch 5, wobei der untere Teil (9) des Rahmens (7) in seinem mittleren Abschnitt (9a) ein Nasenauflageelement (56) umfasst, wobei das Klicksystem (10) dafür ausgebildet ist, das Ausklicken des unteren Teils gegenüber dem oberen Teil (8) durch Drücken auf das Nasenauflageelement zu unterstützen.

7. Brille (1) nach einem der Ansprüche 1 bis 6, wobei die Fügemittel zwei Stecksysteme (19, 20) umfassen, welche jeweils auf Ebene der zwei seitlichen Enden (7b, 7c) des Rahmens zwischen dem oberen Teil (8) und dem unteren Teil (9) des Rahmens (7) angeordnet sind.

8. Brille (1) nach Anspruch 2, wobei der erste halbzylindrische Abschnitt (25, 26) und der zweite halbzylindrische Abschnitt (29, 30) dafür ausgebildet sind, die Flexibilität von mindestens einem der zylindrischen Abschnitte derart zu erhöhen, dass das Spreizen des Schlitzes (35, 36) beim Einklicken oder Ausklicken der Achse (41, 42) des Bügels (5, 6) erleichtert wird.

9. Set zum Zusammenbauen einer Brille (1) nach einem der Ansprüche 1 bis 8, das mindestens einen oberen Teil (8), mindestens einen unteren Teil (9), mindestens ein Paar Gläser (3, 4) und mindestens ein Paar Bügel (5, 6) umfasst.

10. Set nach Anspruch 9, das mindestens ein Paar Korrekturgläser (5, 6) und ein Paar Sonnengläser umfasst.

11. Set nach einem der Ansprüche 9 oder 10, das mindestens zwei Paar Bügel (5, 6) unterschiedlicher Farben oder Muster umfasst.

12. Set, umfassend eine Brille (1) nach einem der Ansprüche 1 bis 8 und ein Werkzeug (63), das dafür ausgebildet ist, das Abmontieren der Bügel (5, 6) durch Einführen des Werkzeugs in jeden Bügel und durch Öffnen des Bügels in Bezug auf den Rahmen (7) nach außen hin zu ermöglichen.

13. Set nach Anspruch 12, wobei einer der Bügel (5) eine Unterbringungszone (66) umfasst, die dafür ausgebildet ist, das Werkzeug (63) aufzunehmen und in Verstauposition zu halten.

## Claims

1. Pair of spectacles (1) including a frame which comprises a rim (7) and two temples (5, 6) mounted in a pivot connection with the side ends (7b, 7c) of said rim, which is provided with an upper portion (8), a lower portion (9) and assembly means (10, 19, 20) between said portions, the pivoting axis defining a longitudinal direction, said pair of spectacles being **characterised in that** the upper portion includes, at each of the side ends (8b, 8c) thereof, a first longitudinal semi-connection portion (29, 30) and the lower portion includes, at each of the side ends (9b, 9c) thereof, a second longitudinal semi-connection portion (25, 26), the first and second longitudinal semi-connection portions being obtained by cutting a first female or male connection element (33, 34) in the longitudinal direction, said first and second longitudinal semi-connection portions complementing one another and being configured so as to form a first female or male connection element, upon assembling the upper portion and the lower portion, said first connection element being configured to receive a second male or female connection element (41, 42), arranged at the end (5a, 6a) of each respective temple.

2. Pair of spectacles (1) according to claim 1, wherein the upper portion (8) comprises at each of the side ends (8b, 8c) thereof a first hollow semi-cylindrical portion (29, 30) and the lower portion (9) comprises at each of the side ends (9b, 9c) thereof a second hollow semi-cylindrical portion (25, 26), the first and second hollow semi-cylindrical portions complementing one another and being configured such that, upon assembling the upper portion and the lower portion, said first and second portions form a hollow cylinder (33, 34) provided with a longitudinal slot (35, 36) designed to enable the engagement of a pin (41, 42) arranged at the end (5a, 6a) of each respective temple (5, 6).

3. Pair of spectacles (1) according to any one of claims 1 or 2, wherein stop means (37, 38, 39, 40) are arranged at the ends (5a, 6a) of the temples (5, 6), the stop means being configured to lock the longitudinal translation of the first longitudinal semi-connection portion (25, 26) with respect to the second longitudinal semi-connection portion (29, 30) upon mounting each temple on the rim (7).

4. Pair of spectacles (1) according to claim 3 dependent on claim 2, wherein each temple (5, 6) comprises at the end (5a, 6a) thereof an upper flat section (37, 38) and a lower flat section (39, 40) between which extends the pin (41, 42), said upper and lower flat sections forming stops configured to lock the translation along said pin of the first semi-cylindrical portion (25, 26) with respect to the second semi-cylindrical portion (29, 30).

5. Pair of spectacles (1) according to any one of claims 1 to 4, wherein the assembly means comprise an engagement system (1) arranged between the upper portion (8) and the lower portion (9) of the rim (7), in a central portion (7a) of said rim.

6. Pair of spectacles (1) according to claim 5, wherein the lower portion (9) of the rim (7) comprises in the central portion (9a) thereof a nasal supporting element (56), the engagement system (10) being configured to favour the disengagement of the lower portion with respect to the upper portion (8) by pressing on said nasal supporting element.

7. Pair of spectacles (1) according to any one of claims 1 to 6, wherein the assembly means comprise two interlocking systems (19, 20) arranged between the upper portion (8) and the lower portion (9) of the rim (7), at the two side ends (7b, 7c) of said rim, respectively.

8. Pair of spectacles (1) according to claim 2, wherein the first semi-cylindrical portion (25, 26) and the second semi-cylindrical portion (29, 30) are configured to increase the flexibility of at least one of said semi-cylindrical portions so as to facilitate the separation of the slot (35, 36) upon the engagement or disengagement of the pin (41, 42) of the temple (5, 6).

9. Kit for forming a pair of spectacles (1) according to any one of claims 1 to 8, which comprises at least one upper portion (8), at least one lower portion (9), at least one pair of lenses (3,4) and at least one pair of temples (5, 6).

10. Kit according to claim 9, which comprises at least one pair of corrective lenses (5, 6) and one pair of sun lenses.

11. Kit according to any one of claims 9 or 10, which comprises at least two pairs of temples (5, 6) of different colours or patterns.

12. Kit comprising a pair of spectacles (1) according to any one of claims 1 to 8 and a tool (63) configured to enable the disassembly of the temples (5, 6) by inserting said tool into each temple and opening the temple outwards with respect to the rim (7).

13. Kit according to claim 12, wherein one of the temples (5) comprises a housing area (66) configured to receive and hold the tool (63) in the storage position.
